# EUROPÄISCHE PATENTANMELDUNG

(11) **EP 0 696 665 A2**
(43) Veröffentlichungstag der Anmeldung: **14.02.1996**
(21) Anmeldenummer: 95112066.6
(22) Anmeldetag: 01.08.1995
(51) Int. Cl.: E03F 5/14, B01D 17/032

(54) **Verfahren zum Reinigen von mit Sink- und Schwimmstoffen verschmutztes Abwasser und Abscheideanlage hierfür**

(30) Priorität: 11.08.1994 DE 9412973 U
(71) Anmelder: PASSAVANT-WERKE AG, D-65322 Aarbergen (DE)
(72) Erfinder: Bachon, Ulrich, D-65582 Diez/Lahn (DE); Loseries, Hans Georg, D-65582 Diez/Lahn (DE); Middelhaufe, Axel, D-65582 Diez/Lahn (DE)

(57) **Zusammenfassung**

Die Erfindung betrifft ein Verfahren zur Reinigung von mit Sink- und Schwimmstoffen verschmutzten Abwässern für die Wiederverwendung z.B. in einer Autowaschanlage. Bei der üblicherweise aus einem Schlammfang, einem Leichtstoffabscheider und einem Speicherbecken mit Rückförderpumpe bestehenden Anlage wird die Aufgabe, das Einbauvolumen der Anlage für den unterirdischen Einbau zu verringern und den Betrieb der Anlage zu vereinfachen, dadurch gelöst, daß der Leichtstoffabscheider oben offen kommunizierend in das Speicherbecken integriert ist und daß die im Speicherbecken aufgeschwommenen Leichtstoffe durch Anheben des Spiegels in den Leichtstoffabscheider überführt werden. Vom dort können sie zusammen mit den dort abgetrennten Leichtstoffen entweder durch Aufstau in ein angeschlossenes Sammelbecken überführt oder durch Absaugen entnommen werden. Zum Überführen der Leichtstoffe in den Abscheider werden die Ausläufe des Abscheiders und des Speicherbeckens geschlossen.

## Beschreibung

Die Erfindung bezieht sich auf ein Verfahren zum Reinigen von Abwasser und auf eine Abscheideanlage hierfür. Es handelt sich dabei um Abwässer, die neben Sinkstoffen mit Leichtstoffen, wie z.B. Benzin, Benzol, Ölen und Fetten aller Art und Paraffinen, verschmutzt sind. Ein Anwendungsbeispiel für ein solches Reinigungsverfahren ist eine Autowaschanlage, bei der die Forderung nach größtmöglicher Kreislaufführung, d.h. Wiederverwendung des gereinigten Abwassers besteht.

Eine solche Abscheideanlage besteht in der Regel aus einer ersten Abscheidestufe, einem sog, Schlammfang, in dem die Sinkstoffe abgetrennt werden, einer zweiten Abscheidestufe für die Leichtstoffabscheidung und einem vom Reinwasser des Leichtstoffabscheiders gespeisten Speicherbecken mit einer Pumpe zur bedarfsgesteuerten Rückführung des gereinigten Abwassers in die Waschanlage.

Bei einer solchen Anlage stellt sich die Aufgabe, das Einbauvolumen für den in aller Regel unterirdischen Einbau erheblich zu verringern und den Betrieb, insbesondere die Entsorgung, wesentlich zu vereinfachen. Der erste Teil dieser Aufgabe wird erfindungsgemäß dadurch gelöst, daß die zweite Abscheidestufe in die Speicherstufe integriert ist. Hierdurch wird nicht nur das Einbauvolumen der Anlage verringert; es wird auch eine Verbindundungsleitung gespart, die wegen der durch sie transportierten Gefahrstoffe auf Dichtigkeit geprüft sein muß. Der zweite Teil der Aufgabe wird dadurch gelöst, daß die zweite Abscheidestufe oben offen kommunizierend mit der Speicherstufe ist und daß dadurch die in der Speicherstufe durch Aufschwimmen noch abgetrennten Leichtstoffe durch Anheben ihres Spiegels in die zweite Abscheidestufe überführt werden können. Diese Leichtstoffe werden dann zusammen mit den in der zweiten Abscheidestufe abgetrennten Leichtstoffen aus dem Abscheider abgezogen.

In weiterer Ausgestaltung der Erfindung erhält das Speicherbecken einen Notüberlauf, dessen Steigrohr ein Absperrorgan aufweist. Der Notüberlauf tritt in Funktion, wenn der Ein/Aus-Schalter der Pumpe versagt und/oder mehr gereinigtes Abwasser anfällt, als in der Waschanlage gebraucht wird. Das Absperrorgan wird geschlossen, wenn die Leichtstoffe aus dem Speicherbecken in die zweite Abscheidestufe überführt werden sollen. Damit hierbei der Spiegel in der zweiten Abscheidestufe durch deren Reinwasserablauf hindurch nicht mitsteigt, erhält dieser Ablauf ein Absperrorgan, das zusammen mit dem Absperrorgan des Speicherbeckens geschlossen wird. Das in Bodennähe des Speicherbeckens beginnende Notüberlaufrohr stellt sicher, daß beim Abpumpen die aufgeschwommenen Leichtstoffe nicht mit abgepumpt werden.

Der in das Speicherbecken integrierte zweite Abscheider kann einen unterhalb seiner Oberkante liegenden Leichtstoffüberlauf in ein Sammelbecken erhalten. Für den Beginn des Überlaufs und des hierfür notwendigen Aufstaus kann ein von der Schichtdicke der aufgeschwommenen Leichtstoffe selbsttätig gesteuertes Verschlußorgan für den Reinwasserablauf, insbesondere in Form eines Schwimmerventils, vorgesehen werden. Es ist aber zweckmäßig, den Leichtstoff schon vor Erreichen der höchstzulässigen Schichtdicke abzuziehen, was z.B. durch eine Warnanlage angezeigt und ggf. auch ausgelöst wird.

Das Wasser für das Anheben des Spiegels im Speicherbecken wird vorzugsweise dem Schlammfang mit einer zusätzlichen Pumpe entnommen.

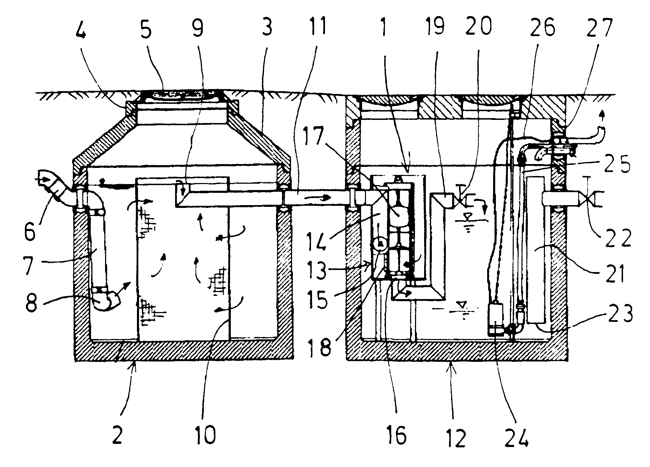

In der Abbildung ist eine erfindungsgemäß ausgebildete Abscheideanlage im vertikalen Gesamtschnitt dargestellt, wobei angenommen wurde, daß ein tieferer Erdeinbau zwecks Erreichens des frostfreien Betriebs hier nicht erforderlich ist.

Das dem Abscheider 1 vorgeschaltete Schlammfangbecken 2 ist ein monolithisch hergestellter Betonbehälter mit statischer Stahlbewehrung. Er ist durch eine Konusdecke 3 zu einer Wartungsöffnung verjüngt, die mit einer auf einen Auflagering 4 aufgesetzten Schachtabdeckung 5 verschlossen ist. Der oben seitlich eingeführte Zulaufstutzen 6 ist als Fallrohr 7 nach unten geführt und endet in einem tangential schräg nach oben weisenden Mundstück 8. Durch diese Zulaufrichtung wird eine lange Spiralströmung zu dem im Zentrum oben angeordneten Überlauf 9 erzeugt. Die im Schlammfangbecken absichtsgemäß noch nicht abgetrennten Leichtstoffe werden über diesen Überlauf in den Leichtstoffabscheider 1 überführt.

Der zentrale obere Überlauf 9 ist konzentrisch von einem über die ganze Höhe des Schlammfangbeckens erstreckten Lochblech- oder Gitter-Zylinder umgeben, der die Spiralströmung in seinem Innern in eine Radialströmung umwandelt. Hierdurch wird u.a. die Abtrennung der Sinkstoffe hydraulisch optimiert, indem der vorhandene Strömungsquerschnitt besser genutzt wird.

Die Verbindungsleitung 11 mündet in den im Einlaufbereich des Speicherbeckens 12 aufgestellten Leichtstoffabscheider 1, dessen Zulaufarmatur 13 ebenfalls ein Fallrohr 14 und ein Tangential-Mundstück 15 aufweist, wodurch auch im Leichtstoffabscheider die vorteilhafte Spiralströmung auftritt, hier allerdings am Ende absteigend zu dem untenliegenden Reinwasserauslauf 16. Dem Reinwasserauslauf ist ein Käfig vorgeordnet, der einem Schwimmerverschluß 17 als Führung dient und mit einer Koaleszenzmatte 18 umwickelt sein kann. Das Auslaufrohr 19 für das Reinwasser mündet etwa in Höhe des Zulaufs in den Abscheider. Dort ist noch ein Verschlußorgan 20 vorgesehen, Das Speicherbecken 12 besitzt an der dem Zulauf gegenüberliegenden Seite einen Notüberlauf 21 mit Absperrorgan 22. Die Einlauföffnung 23 zum Notüberlauf liegt in der Nähe des Bodens.

Das Speicherbecken 12 enthält ferner eine Tauchmotorpumpe 24 am Beckenboden. Die Förderleitung 25 ist genau wie die Stromzuführung 26 nach oben gezogen und durch einen Aufstockring 27 des Beckens nach außen verlegt. Die Pumpe selber kann mittels einer Kette zur Wartung an einer Führungsschiene nach oben gezogen werden. Nicht dargestellt ist das Sammelbecken für die Leichtstoffe, das seitlich an den Leichtstoffabscheider angeschlossen ist. Die Überlauföffnung liegt über dem Betriebsspiegel im Leichtstoffabscheider.

Im Betrieb der Anlage wird zuerst der Schlammfang 2 mit dem verschmutzten Abwasser beaufschlagt. Die Sinkstoffe haben während der Aufenthaltszeit Gelegenheit, zu Boden zu sinken.

Sie werden in bestimmten Zeitabständen von einem Entsorgungsfahrzeug abgesaugt und aufgenommen. Im Abschieder 13 trennen sich anschließend die Leichtstoffe durch Aufschwimmen ab. Hinzukommen die an der Koaleszenzmatte aus nicht direkt abscheidbaren Feinstpartikeln gebildeten Leichtstoffaggregate.

Das gereinigte Wasser wird im Speicherbecken für die Wiederverwendung in der Waschanlage vorgehalten. Die mit einem Ausschalter für den Tiefststand ausgerüstete Pumpe fördert das vorgehaltene Wasser in die Waschanlage zurück. Fällt mehr Wasser an als in der Waschanlage gebraucht wird, dann wird der Notüberlauf wirksam und leitet das Überschußwasser in die Kanalisation.

Die im Abscheider zurückgehaltenen Leichtstoffe müssen in vorgeschriebenen Zeitabständen entnommen werden. Wird diese Entnahme versäumt oder ist der Anfall an Leichtstoffen zeitweise sehr groß, dann kommt es zunächst zur Auslösung eines Alarms, der erst wieder quittiert werden kann, wenn die Leichtstoffe entsorgt wurden. Wird die Entsorgung nicht vorgenommen, dann tritt das Schwimmerverschlußorgan in Funktion und verschließt den Reinwasserauslauf. Der danach eintretende Aufstau führt zu einem Austrag der Leichtstoffe in das Sammelbecken.

Die im Speicherbecken am Spiegel angesammelten Leichtstoffe können von Zeit zu Zeit durch Verschließen der beiden Ventile 20 und 22 und einen dadurch verursachten Aufstau in den Abscheider überführt und später von dort mit entsorgt werden.

## Patentansprüche

1. Verfahren zum Reinigen von nach der Reinigung mindestens größtenteils wiederverwendetem Abwasser, das mit Sink- und Schwimmstoffen verschmutzt ist, z.B. für Autowaschanlagen, mit einer ersten Abscheidestufe für die Sinkstoffe und einer zweiten Abscheidestufe für die Schwimmstoffe sowie einer Speicherstufe für das gereinigte Abwasser bis zur Wiederverwendung, **dadurch gekennzeichnet**, daß die zweite Abscheidestufe oben offen kommunizierend in die Speicherstufe integriert ist und daß die in der Speicherstufe aufgeschwommenen Schimmstoffe durch Anheben ihres Spiegels in die zweite Abscheidestufe überführt werden.

2. Verfahren nach Anspruch 1, **dadurch gekennzeichnet**, daß die Schwimmstoffe aus der zweiten Abscheidestufe durch Anheben ihres Spiegels durch einen unter ihrer offenen Oberkante liegenden über lauf abgezogen werden.

3. Verfahren nach Anspruch 2, **dadurch gekennzeichnet**, daß das Anheben des Spiegels in der zweiten Abscheidestufe durch Verschließen ihres Reinwasserablaufs herbeigeführt wird.

4. Verfahren nach Anspruch 3, **dadurch gekennzeichnet**, daß das Verschließen des Reinwasserablaufs durch ein auf die Dicke der Schicht der abgeschiedenen Schwimmstoffe selbsttätig reagierendes Verschlußorgan geschieht.

5. Verfahren nach Anspruch 1 bis 4, **dadurch gekennzeichnet**, daß in der Speicherstufe anfallendes Überschußwasser durch einen Notüberlauf selbsttätig abgezogen wird.

6. Verfahren nach Anspruch 5, **dadurch gekennzeichnet**, daß für die Überführung der Schwimmstoffe aus der Speicherstufe in die zweite Abscheidestufe der Notüberlauf verschlossen wird.

7. Abscheideanlage zur Durchführung des Verfahrens nach einem oder mehreren der Ansprüche 1 bis 6, bestehend aus einem Schlammfang, einem Leichtstoffabscheider und einem von gereinigtem Abwasser gespeisten Speicherbecken mit einer Pumpe zur gesteuerten Rückführung des gereinigten Abwassers, **dadurch gekennzeichnet**, daß der Leichtstoffabscheider (13) in das Speicherbecken (12) integriert und nach oben offen für den Überlauf von Schwimmstoffen aus dem Speicherbecken (12) ist.

8. Abscheideanlage nach Anspruch 7, **dadurch gekennzeichnet**, daß der Leichtstoffabscheider (13) am Reinwasserauslauf (16) einen von den aufgeschwommenen Leichtstoffen gesteuerten Verschluß (17) aufweist.

9. Abscheideanlage nach Anspruch 7 oder 8, **dadurch gekennzeichnet**, daß das Speicherbecken (12) einen Notüberlauf (21) mit einem Absperrorgan (22) aufweist.

10. Abscheideanlage nach Anspruch 9, **dadurch gekennzeichnet**, daß der Notüberlauf (21) in Bodennähe des Speicherbeckens (12) beginnt.

11. Abscheideanlage nach Anspruch 7 bis 10, **dadurch gekennzeichnet**, daß der Leichtstoffabscheider (13) einen unter seiner offenen Oberkante liegenden Überlauf für die durch Aufstau abgeführten Leichtstoffe in einen Sammelbehälter aufweist.
